(19) Europäisches Patentamt
European Patent Office
Office européen des brevets

(11) **EP 3 802 162 B1**

(12) **EUROPEAN PATENT SPECIFICATION**

(45) Date of publication and mention
of the grant of the patent:
**15.03.2023 Bulletin 2023/11**

(21) Application number: **19811509.9**

(22) Date of filing: **07.05.2019**

(51) International Patent Classification (IPC):
***B60C 23/06*** (2006.01)

(52) Cooperative Patent Classification (CPC):
**B60C 23/061**

(86) International application number:
**PCT/SE2019/050403**

(87) International publication number:
**WO 2019/231373 (05.12.2019 Gazette 2019/49)**

(54) **METHOD, CONTROL UNIT, COMPUTER PROGRAM PRODUCT AND CARRIER FOR IDENTIFYING LOW TIRE PRESSURE IN A VEHICLE**

VERFAHREN, STEUEREINHEIT, COMPUTERPROGRAMMPRODUKT UND TRÄGER ZUR IDENTIFIZIERUNG EINES NIEDRIGEN REIFENDRUCKS IN EINEM FAHRZEUG

PROCÉDÉ, UNITÉ DE COMMANDE, PRODUIT-PROGRAMME INFORMATIQUE ET SUPPORT POUR IDENTIFIER UNE FAIBLE PRESSION DE PNEU DANS UN VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.05.2018 SE 1850655**

(43) Date of publication of application:
**14.04.2021 Bulletin 2021/15**

(73) Proprietor: **Scania CV AB**
**151 87 Södertälje (SE)**

(72) Inventors:
• **TORMOD, Fredrik**
**112 24 Stockholm (SE)**
• **BERGENHEM, Adam**
**151 47 Södertälje (SE)**
• **ÖSTLUND, Tomas**
**141 37 Huddinge (SE)**

(74) Representative: **Scania CV AB**
**Patents, GP 117kv**
**151 87 Södertälje (SE)**

(56) References cited:
**EP-A1- 0 773 118**         **EP-A2- 0 712 740**
**EP-A2- 0 832 767**         **DE-A1-102006 033 589**
**US-A- 5 712 616**          **US-A1- 2002 157 461**
**US-A1- 2003 146 830**      **US-B1- 6 817 236**

**Description**

TECHNICAL FIELD

The invention relates generally to indirect tire pressure monitoring. In particular, the present invention concerns a method for identifying low tire pressure in a vehicle, a control unit implementing this method and a vehicle containing the control unit. The invention also relates to a computer program product and a non-volatile data carrier.

BACKGROUND

To ensure safe and reliable operation of a motor vehicle it is important to check repeatedly certain key parameters of the vehicle. The tire pressure is one example of such a parameter. In a direct pressure monitoring system (dTPMS), a respective pressure sensor is associated with each monitored tire. An indirect pressure monitoring system (iTPMS) instead derives the tire pressures through other sensors that register parameters being indicative of the tire-pressure status. Indirect tire pressure monitoring is generally preferable because here no dedicated tire-pressure sensors are required, and tire-pressure sensors are relatively expensive and difficult to service and maintain. Of course, it is especially beneficial to avoid tire sensors in vehicles with many wheels, typically heavy vehicles, such as trucks, busses and the like. However, as will be discussed below, most of today's iTPMS:s are exclusively designed for automobiles and other types of smaller vehicles.

US 2009/0173149 discloses a method for identifying low-pressure tires. The method includes determining the number of revolutions of each wheel over a preselected driving distance, and comparing crosswise by summing the number of revolutions of the diagonally opposite front right/rear left and front left/rear right wheels and taking the difference between the sums, a diagonal containing a low-pressure tire being identifiable via the sign of the difference between the diagonals. A further comparison for each side of the vehicle is effected by summing the revolutions of the front left/rear left side and front right/rear right side wheels and comparing the difference between the sums, the side containing a low-pressure tire being identifiable via the sign of the difference between the sides. The difference between diagonals is compared with a low-pressure threshold value. If the threshold is exceeded, the signs of the difference between diagonals and between sides are logically combined to identify the low-pressure tire.

US 6,222,444 describes a solution, where wheel speed values for each of four wheels are collected and statistically analyzed axle by axle for a difference which could indicate low tire pressure. Prior to analysis, and following reset of the system, calibration factors are determined for each axle to compensate for rolling radius variation, and are subsequently used to correct the percentage difference values for the two wheels on any one axle. When a sufficient number of values have been collected, a $t_0$ value is calculated for each axle according the paired t-test statistical method or a slight variation thereof. The $t_0$ value for each axle is then compared to a respective empirical value based on a predetermined pressure loss. This comparison can provide the basis for a driver warning. Various types of filters can be used prior to calculating the $t_0$ values to eliminate data that may lead to improper deflation detection.

Further systems for identifying low tire pressure based on wheel speed signals are known from US5712616 A and EP0712740 A2.

Thus, solutions for indirect monitoring of tire pressure exist. However, for various reasons, none of these solutions is capable of detecting insufficient inflation with sufficient accuracy in heavy vehicles. This may be due to the fact that the known systems are primarily aimed at personal vehicles, and in heavy vehicles, the measurement conditions are often more challenging because the load is heavy and/or varies and/or the road quality is poor.

SUMMARY

One object of the present invention is therefore to offer an improved solution for indirect pressure monitoring, which is suitable for road vehicles in a very wide range of types and sizes.

According to one aspect of the invention, this object is achieved by a method performed in a control unit for identifying low tire pressure in a vehicle that has at least three wheels of which at least one is driven. The method includes the following steps. Registering a respective rotational speed of each wheel of the vehicle; comparing the rotational speeds pairwise to one another to derive at least one test variable; and studying the at least one test variable to check if one or more of the wheels have a tire pressure below a threshold level. In particular, the comparing step involves: estimating, for each driven wheel, a longitudinal slip resulting from a traction torque applied to the driven wheel; determining a first compensation factor $\alpha_{i,j}$, which cancels out the estimated longitudinal slip resulting from the traction torque; and evaluating the rotational speeds of the wheels pairwise against one another in consideration of the first compensation factor $\alpha_{i,j}$ and where the estimated longitudinal slips $s_i$, $s_j$ of the wheels of at least one evaluated pair are mutually different wherein the step of pairwise comparing the rotational speeds $\omega_1, \omega_2, \omega_3, \omega_4, \omega_5, \omega_6$ to one another comprises calculating at least one quotient between first and second rotational speeds of first and second wheels respectively.

This method is advantageous because it reliably and efficiently identifies insufficient tire pressures in any motor vehicle having more than two wheels regardless of the vehicle's design, weight or propulsion principle.

For example, the first compensation factor $\alpha_{i,j}$ for the first and second wheels may be calculated as:

$$\alpha_{i,j} = \frac{1 - s_i}{1 - s_j},$$

where $s_i$ is the estimated longitudinal slip for the first wheel, and $s_j$ is the estimated longitudinal slip for the second wheel. The estimated longitudinal slips $s_i$ and $s_j$ are expressed as unit less factors $0 \leq s_i < 1$ and $0 \leq s_j < 1$ respectively, where no longitudinal slip corresponds to $s_i = 0$ and $s_j = 0$ respectively.

Consequently, the first compensation factor $\alpha_{i,j}$ is unit less and expresses a straightforward adjustment of the quotient between the first and second rotational speeds of the first and second wheels.

According to another embodiment of this aspect of the invention, the comparing step further involves determining a second compensation factor $\beta_{i,j}$ reflecting respective effective rolling radii of the first and second wheels. The second compensation factor $\beta_{i,j}$ cancels out differences in rotational speeds between the first and second wheels resulting from any differences in the effective rolling radii of the first and second wheels. The second compensation factor $\beta_{i,j}$ contains a quotient relating two wheels to one another. Specifically, the second compensation factor $\beta_{i,j}$ is determined as:

$$\beta_{i,j} = \frac{r_i}{r_j}$$

where $r_i$ is an unloaded wheel radius of the first wheel, and $r_j$ is an unloaded wheel radius of the second wheel, and wherein the rotational speeds of the wheels are pairwise evaluated against one another, further in consideration of the second compensation factor $\beta_{i,j}$.

In other words, the second compensation factor $\beta_{i,j}$ is also unit less and provides a straightforward adjustment of the quotient between the first and second rotational speeds of the first and second wheels.

According to still another embodiment of this aspect of the invention, the comparing step involves determining a third compensation factor $\gamma_{i,j}$ reflecting respective deviations from the effective rolling radii of first and second wheels resulting from load effects on the first and second wheels. The third compensation factor $\gamma_{i,j}$ cancels out differences in rotational speeds between the first and second wheels resulting from any differences in vertical load on the first and second wheels.

The third compensation factor $\gamma_{i,j}$ contains a quotient relating two wheels to one another. Specifically, the third compensation factor $\gamma_{i,j}$ is determined as:

$$\gamma_{i,j} = \frac{r_{ldi}}{r_{ldj}}$$

where $r_{ldi}$ is an estimated rolling radius of the first wheel resulting from a vertical load on the first wheel, and $r_{ldj}$ is an estimated rolling radius of the second wheel resulting from a vertical load on the second wheel and

wherein the rotational speeds of the wheels are pairwise evaluated against one another, further in consideration of the third compensation factor $\gamma_{i,j}$.

Naturally, $r_{ldi}$ and $r_{ldj}$ not only reflect any radius alteration due to the vertical load however also any differences in the effective rolling radius between the first and second wheels, i.e. the unloaded measures. Analogous to the above, the third compensation factor $\gamma_{i,j}$ is unit less and provides a straightforward adjustment of the quotient between the first and second rotational speeds of the first and second wheels.

According to yet another embodiment of this aspect of the invention, deriving the at least one test variable involves deriving first and second test variables $R_1$ and $R_2$, each of which contains pairs of quotients, where each pair relates the rotational speed of two wheels to one another while compensating for the main factors, which influence the rotational speed for those two wheels. Specifically, the first test variable $R_1$ is derived as:

$$R_1 = \frac{\omega_i}{\omega_j}\alpha_{i,j}\beta_{i,j} - \frac{\omega_k}{\omega_l}\alpha_{k,l}\beta_{k,l}$$

where $\omega_i$ is a rotational speed of the first wheel,

$\omega_j$ is a rotational speed of the second wheel,
$\alpha_{i,j}$ is the first compensation factor for the first and second wheels,
$\beta_{i,j}$ is the second compensation factor for the first and second wheels,
$\omega_k$ is a rotational speed of a third wheel,
$\omega_l$ is a rotational speed of a fourth wheel,
$\alpha_{k,l}$ is the first compensation factor for the third and fourth wheels, and
$\beta_{k,l}$ is the second compensation factor for the third and fourth wheels.

The second test variable $R_2$ is derived as:

$$R_2 = \frac{\omega_i}{\omega_j}\alpha_{i,j}\gamma_{i,j} - \frac{\omega_k}{\omega_l}\alpha_{k,l}\gamma_{k,l}$$

where $\gamma_{i,j}$ is the third compensation factor for the first and second wheels, and

$\gamma_{k,1}$ is the third compensation factor for the third and fourth wheels, and
wherein studying the at least one test variable comprises studying the first and second test variables $R_1$, $R_2$.

Consequently, via the first and second test variables $R_1$ and $R_2$ respectively, all wheels of a vehicle can be compared against one another in an unbiased manner even if the wheels experience different longitudinal slips, have different tire dimensions and/or are differently influenced by load. Thus, any deviating tire pressures can be identified with high reliability also in heavy vehicles, such as trucks and busses.

According to a further aspect of the invention the object is achieved by a computer program containing instructions which, when executed on at least one processor, cause the at least one processor to carry out the above-described method.

According to another aspect of the invention, the object is achieved by a non-volatile data carrier containing such a computer program.

According to yet another aspect of the invention, the above object is achieved by a control unit adapted to be comprised in a vehicle having at least three wheels of which at least one is driven. The control unit is configured to identify low tire pressure in by: registering a respective rotational speed of each wheel of the vehicle; comparing the rotational speeds pairwise to one another to derive at least one test variable; and studying the at least one test variable to check if one or more of the wheels have a tire pressure below a threshold level. More precisely, the control unit is configured to perform the comparing via a procedure that involves: estimating, for each driven wheel, a longitudinal slip resulting from a traction torque applied to the driven wheel; determining a first compensation factor, which cancels out the estimated longitudinal slip resulting from the traction torque; and evaluating the rotational speeds of the wheels pairwise against one another in consideration of first compensation factor and wherein the estimated longitudinal slips of the wheels of at least one evaluated pair are mutually different estimated longitudinal slips. The advantages of this control unit, as well as the preferred embodiments thereof, are apparent from the discussion above with reference to the proposed method.

According to still another aspect of the invention, the object is achieved by a vehicle including the proposed control unit for identifying any wheels of the vehicle that have low tire pressure.

Further advantages, beneficial features and applications of the present invention will be apparent from the following description and the dependent claims.

BRIEF DESCRIPTION OF THE DRAWINGS

The invention is now to be explained more closely by means of preferred embodiments, which are disclosed as examples, and with reference to the attached drawings.

Figures 1a-b    schematically depict the wheels of a vehicle in which an embodiment of the invention is implemented;

Figure 2      illustrates an effective rolling radius and a load-influenced wheel radius respectively used according to embodiments of the invention;

Figure 3      shows a block diagram of a vehicle according to one embodiment of the invention;

Figure 4      illustrates a known relationship between traction torque and longitudinal slip of a driven wheel; and

Figure 5      illustrates, by means of a flow diagram, the general method according to the invention.

DETAILED DESCRIPTION

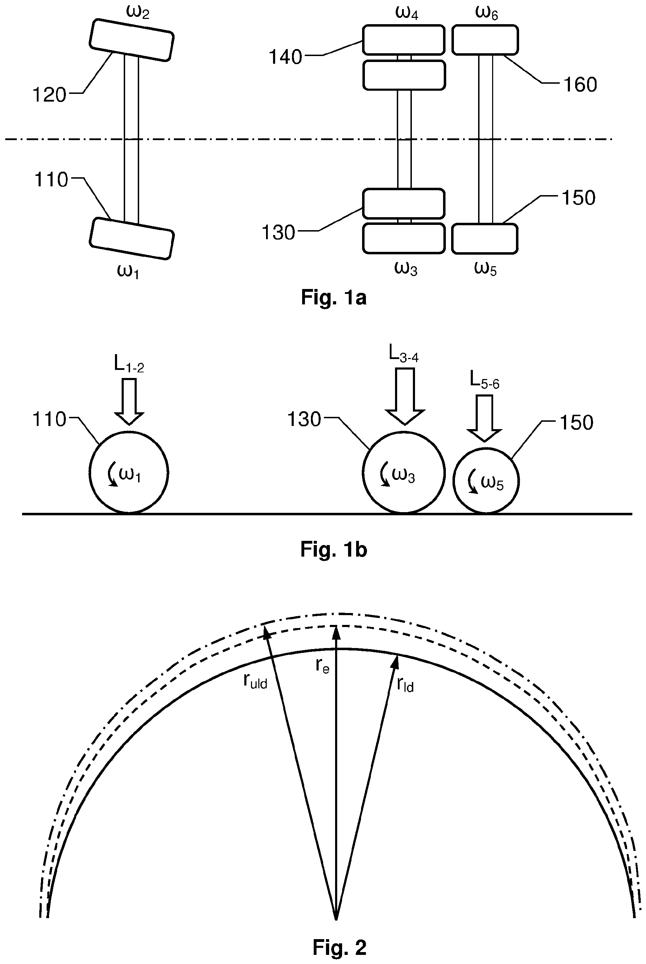

Figure 1a depicts a schematic top view of the wheels 110, 120, 130, 140, 150 and 160 respectively of a vehicle. In this example a first pair of wheels 110 and 120 is steerable, a second pair of wheels 130 and 140 is driven and a third pair of wheels 150 and 160 is mounted on a raisable axle. Moreover, the second pair of wheels 130 and 140 is doubled and the third pair of wheels has a somewhat smaller radius than the other wheels. It should be noted that in the present disclosure, low tire pressure of an individual wheel in a doubled wheel like 130 and 140 cannot be identified separately. Thus, such doubled wheels are treated as one single wheel.

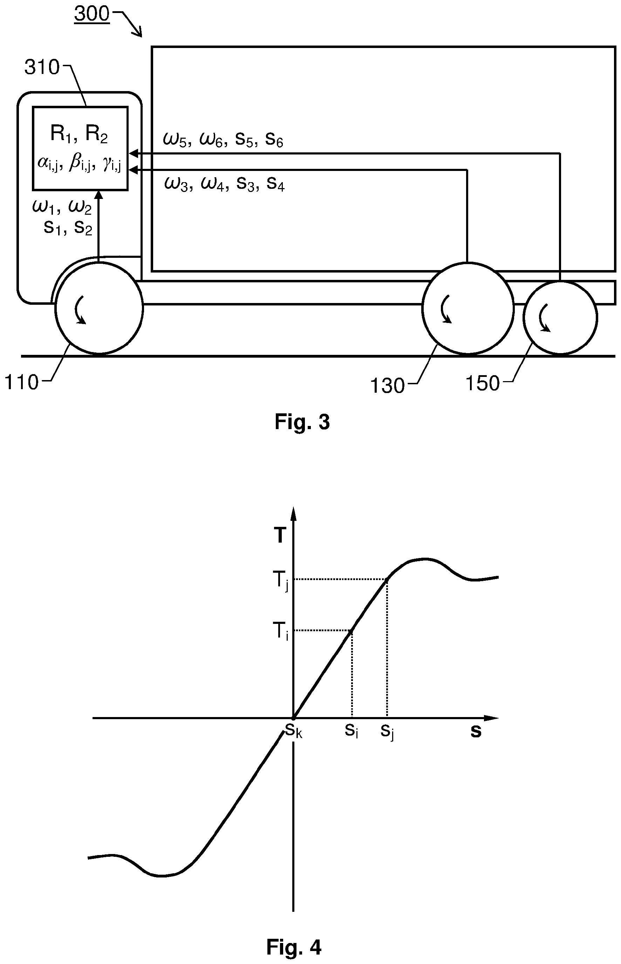

Referring now to Figure 3, according to the invention, a respective rotational speed $\omega_1$, $\omega_2$, $\omega_3$, $\omega_4$, $\omega_5$ and $\omega_6$ of each wheel 110, 120, 130, 140, 150 and 160 of the vehicle 300 is registered in a control unit 310. The control unit 310 may be implemented in an ECU (Electronic Control Unit), i.e. an embedded system in automotive electronics controlling one or more electrical systems or subsystems in the vehicle 300, for example via a CAN (Controller Area Network) bus. The control unit 310 may contain a processing unit with processing means including at least one processor, such as one or more general-purpose processors. Further, this processing unit is further preferably communicatively connected to a data carrier in the form computer-readable storage medium, such as a Random Access Memory (RAM), a Flash memory, or the like. The data carrier contains computer-executable instructions, i.e. a computer program , for causing the processing unit and the other units of the system to perform in accordance with the embodiments of the invention as described herein, when the computer-executable instructions are executed on the at least one processor of the processing unit.

The control unit 310 is configured compare the rotational speeds $\omega_1$, $\omega_2$, $\omega_3$, $\omega_4$, $\omega_5$ and $\omega_6$ pairwise to one another to derive one or more test variables. Below, we will describe how two such test variables $R_1$ and $R_2$ are derived according to embodiments of the invention. In particular, the control unit 310 is configured to study the at least one test variable $R_1$ and $R_2$ to check if one or more of the wheels $\omega_1$, $\omega_2$, $\omega_3$, $\omega_4$, $\omega_5$ and $\omega_6$ have a tire pressure below a threshold level.

A simple and straightforward way of detecting a loss of inflation pressure is simply to study raw data from wheel speed sensors in the vehicle 300. If a particular wheel suffers from a loss of inflation pressure, the rotational speed of this wheel increases somewhat resulting from a slight decrease in the wheel's radius.

A problem with this approach, however, is that reliable rotational speed comparisons can only be made between wheels on the same axle. Further, since the vertical load on each axle may fluctuate substantially due to cargo load, the wheel radius will vary for other reasons than deviating tire pressures. Moreover, as will be discussed in detail below, the rotational speeds of driven and non-driven wheels are complicated to compare to one another.

If, nevertheless, the above factors are temporarily disregarded, we can study the below test variables $r_1$ and $r_2$ to isolate a single fault in vehicle having four wheels W1, W2, W3 and W4:

$$r_1 = \frac{\omega_1}{\omega_2} - \frac{\omega_3}{\omega_4},$$

and

$$r_2 = \frac{\omega_2}{\omega_1} - \frac{\omega_3}{\omega_4}.$$

Ideally, $r_1$ and $r_2$ should both zero if none of the wheels has a deviating/low tire pressure, i.e. in a non-fault scenario (NF in the below table). It should be noted that the test variables $r_1$ and $r_2$ can only be expected to be close to zero if the vehicle travels relatively straight and neither accelerates nor decelerates substantially.

| fault | $r_1$ | $r_2$ |
|---|---|---|
| NF | 0 | 0 |
| W1 | >0 | <0 |
| W2 | <0 | >0 |
| W3 | <0 | <0 |
| W4 | >0 | >0 |

The table is used as follows. Let us assume that the wheel W4 has an insufficient tire pressure. This leads to that its rotational speed $\omega_4$ becomes slightly higher than rotational speeds $\omega_1$, $\omega_2$ and $\omega_3$; and as a further result, both $r_1$ and $r_2$ will have positive values, i.e. $r_1 > 0$ and $r_2 > 0$. In the table, this is equivalent to a fault in wheel W4. Analogous conclusions are valid for single pressure faults in the wheels W1, W2 and W3.

Due to various noise effects, the test variables $r_1$ and $r_2$ will never actually be zero. In practice, therefore, any absolute values of the test variables $r_1$ and $r_2$ below a threshold are interpreted as a non-fault scenario. Further, in practice, instead of testing whether a single test variable $r_1$ and/or $r_2$ is above or below zero, it is preferable to investigate a sequence of test variables and check if an average value of the sequence of test variables is positive or negative in relation an error-free case. Still, the simple test variables $r_1$ and $r_2$ and the above table are incapable of identifying tire-pressure faults when one or more of the wheels involved are driven and one or more of the wheels involved are non-driven. Therefore, according to the invention, the comparing step involves the below procedure.

For each driven wheel, i.e. 130 and 140 in Figure 1a, a longitudinal slip is estimated, which results from a traction torque applied to the driven wheel. Figure 4 exemplifies a relationship between the longitudinal slip s that results from the traction torque T, the so-called tire-road interaction, or "magic formula", which is inter alia is described by J. Y. Wong. "Theory of ground vehicles", John Wiley & Sons, Inc., 4th edition, 2008, pp 14-15.

As can be seen in the graph, for small longitudinal slips s there is a linear relationship between the traction torque T and the longitudinal slip s. This linear domain is a fair approximation under typical driving conditions (i.e. without extreme acceleration or deceleration). This means that longitudinal slip s can be estimated based on a current torque value, which in turn, can be calculated from a drive axle torque causing the traction torque on the wheel.

A first wheel to which a first traction torque Ti is applied thus experiences an estimated first longitudinal slip $s_i$, and a second wheel to which a second traction torque $T_j$ is applied experiences an estimated second longitudinal slip $s_j$. Provided that $T_j > Ti$, (and the linear domain is applicable) then $s_j > s_i$. Of course, for a non-driven wheel, both the traction torque T and the longitudinal slip s are zero. In Figure 4, this is exemplified by $s_k$.

Based on the known relationship between traction torque T and longitudinal slip s, the control unit 310 is configured to determine a first compensation factor $\alpha_{i,j}$, which cancels out the estimated longitudinal slip s resulting from the traction torque T on the driven wheel, i.e. 130 and 140 in Figures 1a and 3.

Then, the control unit 310 is configured to evaluate the rotational speeds of the wheels pairwise against one another in consideration of a first compensation factor $\alpha_{i,j}$ and such that the wheels of at least one evaluated pair have mutually different estimated longitudinal slips s, for example $s_i$, and $s_j$, $s_i$ and $s_k$ and/ or $s_j$ and $s_k$ in Figure 4.

Namely, thereby, test variables can be formed based on quotients of rotational speeds of wheels mounted on different axles irrespective of whether the axles are driven or not. For example, a front left wheel 110 can be compared to a rear right wheel 140 to isolate a fault. This is especially advantageous if multiple faults are present simultaneously. Moreover, the redundancy gained provides robustness to the solution.

According to one embodiment of the invention, the first compensation factor $\alpha_{i,j}$ for a first wheel and a second wheel is calculated as:

$$\alpha_{i,j} = \frac{1 - s_i}{1 - s_j},$$

where: $s_i$ is the estimated longitudinal slip for the first wheel,
$s_j$ is the estimated longitudinal slip for the second wheel

Here, $s_i$ and $s_j$ are both unit less variables between zero and one, i.e. $0 \le s_i < 1$ and $0 \le s_j < 1$. The longitudinal slip s, in turn, may be calculated as:

$$s = 1 - \frac{v}{\omega \cdot r_e},$$

where: v is the velocity of the vehicle 300,

$\omega$ is the rotational speed of the wheel, and
$r_e$ is the effective rolling radius of the wheel.

Figure 1b schematically depicts a side view of the wheels 110, 130 and 150 of the vehicle 300. Again, as can be seen, the wheels 150 and 160 on the raisable third axle have a smaller radius than the other wheels. In order to enable comparison of the rotational speeds $\omega_5$ and $\omega_6$ of the wheels 150 and 160 respectively with for example the rotational speeds $\omega_1$ and $\omega_2$ of the wheels 110 and 120 respectively, according to one embodiment of the invention, the control unit 310 is configured to calculate a second compensation factor $\beta_{i,j}$.

The second compensation factor $\beta_{i,j}$ reflects respective effective rolling radii $r_e$ of the first and second wheels. The second compensation factor $\beta_{i,j}$ cancels out differences in rotational speeds between the first and second wheels, which rotational speed differences, in turn, result from any differences in the effective rolling radii $r_e$ of the first and second wheels. According to this embodiment of the invention, the second compensation factor $\beta_{i,j}$ is determined as:

$$\beta_{i,j} = \frac{r_i}{r_j},$$

where $r_i$ is an unloaded wheel radius $r_{uld}$ of the first wheel, and
$r_j$ is an unloaded wheel radius $r_{uld}$ of the second wheel.

The control unit 310 is then further configured to evaluate the rotational speeds of the wheels pairwise against one another further in consideration of the second compensation factor ($\beta_{i,j}$). Thus the second compensation factor $\beta_{i,j}$ thereby cancels out differences in rotational speeds between the first and second wheels, which rotational speed differences, in turn, is resulting from any differences in the effective rolling radii $r_e$ of the first and second wheels.

Ideally, of course, the effective rolling radii $r_e$ of the first and second wheels should be used to determine the second compensation factor $\beta_{i,j}$. However, in practice, the respective unloaded wheel radii $r_{uld}$ constitute adequate approximations to provide reliable results.

Thus, in a scenario where first, second, third and fourth wheels, say 110, 120, 130 and 140 respectively, are to be compared to one another in order to identify potential tire-pressure losses, the first variable $R_1$ may be derived as:

$$R_1 = \frac{\omega_i}{\omega_j} \alpha_{i,j} \beta_{i,j} - \frac{\omega_k}{\omega_l} \alpha_{k,l} \beta_{k,l}$$

where $\omega_i$ is a rotational speed of the first wheel,

$\omega_j$ is a rotational speed of the second wheel,
$\alpha_{i,j}$ is the first compensation factor for the first and second wheels,
$\beta_{i,j}$ is the second compensation factor for the first and second wheels,
$\omega_k$ is a rotational speed of a third wheel,
$\omega_l$ is a rotational speed of a fourth wheel,
$\alpha_{k,l}$ is the first compensation factor for the third and fourth wheels, and
$\beta_{k,l}$ is the second compensation factor for the third and fourth wheels.

Figure 1b schematically shows how a first vertical load $L_{1-2}$ is applied over a first axle onto which the wheels 110 and 120 are mounted, a second vertical load $L_{3-4}$ is applied over a second axle onto which the wheels 130 and 140 are mounted, and a third vertical load $L_{5-6}$ is applied over a third axle onto which the wheels 150 and 160 are mounted. Figure 2 further illustrates how the effective rolling radius $r_e$ may differ from an actual radius $r_{ld}$ of a wheel under the influence of a load. Figure 2 also shows the unloaded wheel radius $r_{uld}$, i.e. a tire dimension completely uninfluenced by loads, or any other size modifying factors.

In order to compensate also for differences in wheel radii caused by various load factors, the second test variable $R_2$ may be derived as:

$$R_2 = \frac{\omega_i}{\omega_j}\alpha_{i,j}\gamma_{i,j} - \frac{\omega_k}{\omega_l}\alpha_{k,l}\gamma_{k,l}$$

where $\gamma_{i,j}$ is a third compensation factor for the first and second wheels, and $\gamma_{k,l}$ is the third compensation factor for the third and fourth wheels.

Studying the at least one test variable then comprises studying the first and second test variables $R_1$ and $R_2$.

According to one embodiment of the invention, the third compensation factor $\gamma_{k,l}$, in turn, is determined as:

$$\frac{r_{ldj}}{r_{ldi}}$$

where $r_{ldi}$ is an estimated rolling radius of the first wheel, e.g. 130, resulting from a vertical load $L_{3-4}/2$ on this wheel, and $r_{ldj}$ is an estimated rolling radius of the second wheel, e.g. 150, resulting from a vertical load $L_{5-6}/2$ on this wheel.

Hence, the third compensation factor $\gamma_{i,j}$ reflects respective deviations from the effective rolling radii $r_e$ of first and second wheels 130 and 150 that result from vertical loads $L_{3-4}/2$ and $L_{5-6}/2$ respectively on these wheels. The third compensation factor $\gamma_{i,j}$ cancels out differences in rotational speeds between the first and second wheels 130 and 150 caused any differences in load effects on the first and second wheels. The third compensation factor $\gamma_{i,j}$ is determined as:

$$\gamma_{i,j} = \frac{r_{ldi}}{r_{ldj}}$$

where $r_{ldi}$ is an estimated rolling radius of the first wheel resulting from a vertical load on the first wheel, and $r_{ldj}$ is an estimated rolling radius of the second wheel resulting from a vertical load on the second wheel.

The control unit 310 is then further configured to evaluate the rotational speeds of the wheels pairwise against one another further in consideration of the third compensation factor ($\gamma_{i,j}$). Thus the third compensation factor ($\gamma_{i,j}$) thereby cancels out differences in rotational speeds between the first and second wheels, which rotational speed differences, in turn, is resulting from any differences in load effects on the first and second wheels. It should be noted that, if there are also differences in the effective rolling radii between the first and second wheels 130 and 150 (as in the present example), this is also reflected in the estimated rolling radii $r_{ldi}$ and $r_{ldj}$. I.e. the estimated rolling radii $r_{ldi}$ and $r_{ldj}$ express respective actual wheel measures resulting from a combination of the effective rolling radii and the vertical loads.

To further improve the quality of the proposed method, a so-called cumulative-sum (cusum) test may be applied distinguish no-fault cases from faulty cases. The cusum test relies on differences in mean values and integrates these mean values over time.

Let a test quantity $R_i$ commonly denote the above test variables $R_1$ and $R_2$.

$R_i$ is then evaluated in each time step k to create test quantity S that is compared against desired thresholds.

For example, the test quantity S can be evaluated to find a positive or negative shift in the mean value, as stated in:

$$S_{max}(0) = 0$$

$$S_{max}(k+1) = \max(0, S_{max}(k) + R_i(k) + v_1)$$

and

$$S_{min}(0) = 0$$

$$S_{min}(k+1) = \min(0, S_{min}(k) - R_i(k) + v_2)$$

where $v_1$ and $v_2$ are safety factors adapted to push the test quantity $R_i$ towards zero for the no fault cases. Namely, in practice, the test variables $R_1$ and $R_2$ will not have an exact mean value of zero, i.e. when no faults are present. At the same time, each safety factor $v_1$ and $v_2$ should have a small enough value to allow for the test quantity $R_i$ to go towards plus or minus infinity depending on if the shift in the mean value is positive or negative. Consequently, setting the safety factors $v_1$ and $v_2$ is a matter of choosing between robustness against false alarm and promptness to detect actual faults.

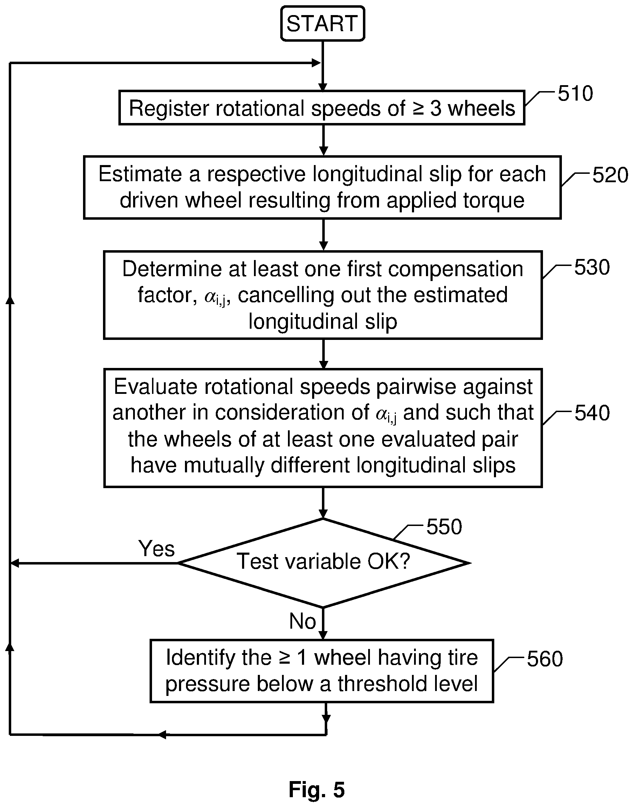

In order to sum up, and with reference to the flow diagram in Figure 5, we will now describe the general method according to the invention for identifying low tire pressure. The method presumes that the vehicle has at least three wheels. However, of course, four wheels is the typical minimum for a standard automobile. Moreover, it should be noted that there is no upper limit. Thus, for example, the method is equally well adapted for 18-wheeler trucks.

In a first step 510, a respective rotational speed of each wheel of the vehicle is registered.

In a subsequent step 520, a respective longitudinal slip is estimated for each driven wheel, which longitudinal slip results from the traction torque on the wheel in question.

Thereafter, in a step 530, at least a first compensation factor $\alpha_{i,j}$ is determined, which cancels out the estimated longitudinal slips estimated in step 520.

In a following step 540, the rotational speeds of the wheels are evaluated pairwise against one another in consideration of the at least one first compensation factor $\alpha_{i,j}$ in such a manner that the wheels of at least one evaluated pair have mutually different estimated longitudinal slips, i.e. either driven against non-driven; or driven against driven, but driven at different traction torque.

Additionally or alternatively, evaluating the rotational speeds of the wheels pairwise against one another, in consideration of the first compensation factor $\alpha_{i,j}$ and where the estimated longitudinal slips $s_i$, $s_j$ of the wheels of at least one evaluated pair are mutually different wherein the step of pairwise comparing the rotational speeds $\omega_1$, $\omega_2$, $\omega_3$, $\omega_4$, $\omega_5$, $\omega_6$ to one another comprises calculating at least one quotient between first and second rotational speeds of first and second wheels respectively.

In one example, wheels are evaluated pairwise by forming the pairs (110, 160), (120, 150), (140/160) and (130, 150). In other words. In other words forming wheel pairs where the estimated longitudinal slips ($s_i$, $s_j$) of the wheels of evaluated pairs are mutually different, or where slips of at least one evaluated pair is different. E.g. calculating the quotients:

$$\frac{\omega_1}{\omega_6}, \frac{\omega_2}{\omega_5}, \frac{\omega_4}{\omega_6}, \frac{\omega_3}{\omega_5}$$

The first test variable $R_1$ and the second test variable $R_2$ can then be derived using the calculated quotients. This procedure is further described in relation to Figures 1b and 3 above.

Studying $R_1$ and $R_2$ to check if one or more of the wheels have a tire pressure below a threshold level can be done using the table described in relation to Figure 3 above. Optionally or additionally a cusum test can be performed by calculating the test quantity S over time, as further described in relation to Figures 1b and 3 above.

Subsequently a step 550 checks if each of at least one test variable derived in step 540 is acceptable; and if so, the procedure loops back to step 510.

Otherwise, i.e. if one or more of the at least one test variable indicates a fault, a step 560 follows in which one or more wheels are identified which have a tire pressure below a threshold level. Then, the procedure loops back to step 510.

If, in step 550 at least one pressure-related fault is encountered, the procedure preferably also involves notifying a driver of this fault, for example via an indicator on the vehicle's instrument cluster, a heads-up display and/or a portable device, e.g. a smart-phone. Additionally, or as an alternative, a message describing the fault may be sent to an appropriate workshop.

All of the process steps, as well as any sub-sequence of steps, described with reference to Figure 5 above may be controlled by means of at least one programmed processor. Moreover, although the embodiments of the invention described above with reference to the drawings comprise processor and processes performed in at least one processor, the invention thus also extends to computer programs, particularly computer programs on or in a carrier, adapted for putting the invention into practice. The program may be in the form of source code, object code, a code intermediate source and object code such as in partially compiled form, or in any other form suitable for use in the implementation of the process according to the invention. The program may either be a part of an operating system, or be a separate application. The carrier may be any entity or device capable of carrying the program. For example, the carrier may comprise a storage medium, such as a Flash memory, a ROM (Read Only Memory), for example a DVD (Digital Video/Versatile Disk), a CD (Compact Disc) or a semiconductor ROM, an EPROM (Erasable Programmable Read-Only Memory), an EEPROM (Electrically Erasable Programmable Read-Only Memory), or a magnetic recording medium, for example a floppy disc or hard disc. Further, the carrier may be a transmissible carrier such as an electrical or optical signal which may be conveyed via electrical or optical cable or by radio or by other means. When the program is embodied in a signal which may be conveyed directly by a cable or other device or means, the carrier may be constituted by such cable or device or means.

Alternatively, the carrier may be an integrated circuit in which the program is embedded, the integrated circuit being adapted for performing, or for use in the performance of, the relevant processes.

The term "comprises/comprising" when used in this specification is taken to specify the presence of stated features, integers, steps or components. However, the term does not preclude the presence or addition of one or more additional features, integers, steps or components or groups thereof.

The invention is not restricted to the described embodiments in the figures, but may be varied freely within the scope of the claims.

## Claims

1. A method performed in a control unit (310) for identifying low tire pressure in a vehicle (300) having at least three wheels (110, 120, 130, 140, 150, 160) of which at least one is driven, the method comprising the steps of:

   registering a respective rotational speed ($\omega_1$, $\omega_2$, $\omega_3$, $\omega_4$, $\omega_5$, $\omega_6$) of each wheel of the vehicle;
   comparing the rotational speeds pairwise to one another to derive at least one test variable ($R_1$, $R_2$); and
   studying the at least one test variable to check if one or more of the wheels have a tire pressure below a threshold level,

   **characterized by** the comparing step involving:

   estimating, for each driven wheel (130, 140), a longitudinal slip (s) resulting from a traction torque (T) applied to the driven wheel;
   determining a first compensation factor ($\alpha_{i,j}$), which cancels out the estimated longitudinal slip (s) resulting from the traction torque (T) applied to the driven wheel (130, 140); and
   evaluating the rotational speeds of the wheels pairwise against one another, in consideration of the first compensation factor ($\alpha_{i,j}$) and where the estimated longitudinal slips ($s_i$, $s_j$) of the wheels of at least one evaluated pair are mutually different wherein the step of pairwise comparing the rotational speeds ($\omega_1$, $\omega_2$, $\omega_3$, $\omega_4$, $\omega_5$, $\omega_6$) to one another comprises calculating at least one quotient between first and second rotational speeds of first and second wheels respectively.

2. The method according to claim 1, wherein the first compensation factor ($\alpha_{i,j}$) for first and second wheels is calculated as:

$$\frac{1 - s_i}{1 - s_j}$$

   where: $s_i$ is the estimated longitudinal slip for the first wheel,
   $s_j$ is the estimated longitudinal slip for the second wheel, $0 \leq s_i < 1$ and $0 \leq s_j < 1$.

3. The method according to any one of the preceding claims, wherein the comparing step further comprises determining a second compensation factor ($\beta_{i,j}$) reflecting respective effective rolling radii ($r_e$) of the first and second wheels, the second compensation factor ($\beta_{i,j}$) cancelling out differences in rotational speeds between the first and second wheels resulting from any differences in the effective rolling radii ($r_e$) of the first and second wheels, and the second compensation factor ($\beta_{i,j}$) being determined as:

$$\frac{r_i}{r_j}$$

   where $r_i$ is an unloaded wheel radius ($r_{uld}$) of the first wheel, and
   $r_j$ is an unloaded wheel radius ($r_{uld}$) of the second wheel, and
   wherein the rotational speeds of the wheels are pairwise evaluated against one another, further in consideration of the second compensation factor ($\beta_{i,j}$).

4. The method according to claim 3, wherein the comparing step comprises determining a third compensation factor ($\gamma_{i,j}$) reflecting respective deviations from the effective rolling radii ($r_e$) of first and second wheels resulting from load effects ($L_{1\text{-}2}$, $L_{3\text{-}4}$, $L_{5\text{-}6}$) on the first and second wheels, the third compensation factor ($\gamma_{i,j}$) cancelling out differences in rotational speeds between the first and second wheels resulting from any differences in load effects on the first and second wheels, and the third compensation factor ($\gamma_{i,j}$) being determined as:

$$\frac{r_{ldj}}{r_{ldi}}$$

where

$r_{ldi}$ is an estimated rolling radius of the first wheel resulting from a vertical load on the first wheel, and
$r_{ldj}$ is an estimated rolling radius of the second wheel resulting from a vertical load on the second wheel, and

wherein the rotational speeds of the wheels are pairwise evaluated against one another, further in consideration of the third compensation factor ($\gamma_{i,j}$).

5. The method according to claim 4, wherein deriving the at least one test variable comprises deriving first and second test variables ($R_1$, $R_2$), the first test variable ($R_1$) being derived as:

$$\frac{\omega_i}{\omega_j}\alpha_{i,j}\beta_{i,j} - \frac{\omega_k}{\omega_l}\alpha_{k,l}\beta_{k,l}$$

where $\omega_i$ is a rotational speed of the first wheel,

$\omega_j$ is a rotational speed of the second wheel,
$\alpha_{i,j}$ is the first compensation factor for the first and second wheels,
$\beta_{i,j}$ is the second compensation factor for the first and second wheels,
$\omega_k$ is a rotational speed of a third wheel,
$\omega_l$ is a rotational speed of a fourth wheel,
$\alpha_{k,l}$ is the first compensation factor for the third and fourth wheels, and
$\beta_{k,l}$ is the second compensation factor for the third and fourth wheels; and

the second test variable ($R_2$) being derived as:

$$\frac{\omega_i}{\omega_j}\alpha_{i,j}\gamma_{i,j} - \frac{\omega_k}{\omega_l}\alpha_{k,l}\gamma_{k,l}$$

where $\gamma_{i,j}$ is the third compensation factor for the first and second wheels, and
$\gamma_{k,l}$ is the third compensation factor for the third and fourth wheels, and
wherein studying the at least one test variable comprises studying the first and second test variables ($R_1$, $R_2$).

6. A computer program product loadable into a non-volatile data carrier communicatively connected to a processing unit, the computer program comprising software for executing the method according any of the claims 1 to 5 when the computer program is run on the processing unit.

7. A non-volatile data carrier containing the computer program of the claim 6.

8. A control unit (310) adapted to be comprised in a vehicle (300) having at least three wheels (110, 120, 130, 140, 150, 160) of which at least one is driven, the control unit (310) being configured to identify low tire pressure in by:

registering a respective rotational speed ($\omega_1$, $\omega_2$, $\omega_3$, $\omega_4$, $\omega_5$, $\omega_6$) of each wheel of the vehicle;
comparing the rotational speeds pairwise to one another to derive at least one test variable ($R_1$, $R_2$); and
studying the at least one test variable to check if one or more of the wheels have a tire pressure below a threshold level,

**characterized in that** the control unit (310) is configured to perform the comparing via a procedure involving:

estimating, for each driven wheel (130, 140), a longitudinal slip (s) resulting from a traction torque (T) applied to the driven wheel;

determining a first compensation factor ($\alpha_{i,j}$) which cancels out the estimated longitudinal slip (s) resulting from the traction torque (T) on the driven wheel (130, 140); and

evaluating the rotational speeds of the wheels pairwise against one another in consideration of the first compensation factor ($\alpha_{i,j}$) and wherein the estimated longitudinal slips ($s_i$, $s_j$) of the wheels of at least one evaluated pair are mutually different, wherein the control unit (310) is configured to compare the rotational speeds ($\omega_1$, $\omega_2$, $\omega_3$, $\omega_4$, $\omega_5$, $\omega_6$) pairwise to one another via a procedure involving calculating at least one quotient between first and second rotational speeds of first and second wheels respectively.

9. The control unit (310) according to claim 8, wherein the control unit (310) is configured to calculate the first compensation factor ($\alpha_{i,j}$) for first and second wheels as:

$$\frac{1 - s_i}{1 - s_j}$$

where: $s_i$ is the estimated longitudinal slip for the first wheel, $s_j$ is the estimated longitudinal slip for the second wheel, $0 \leq s_i < 1$ and $0 \leq s_j < 1$.

10. The control unit (310) according to any one of claims 8 to 9, wherein the control unit (310) is configured to compare the rotational speeds ($\omega_1$, $\omega_2$, $\omega_3$, $\omega_4$, $\omega_5$, $\omega_6$) pairwise to one another via a procedure involving determining a second compensation factor ($\beta_{i,j}$) reflecting respective effective rolling radii ($r_e$) of first and second wheels, the second compensation factor ($\beta_{i,j}$) cancelling out differences in rotational speeds between the first and second wheels resulting from any differences in the effective rolling radii ($r_e$) of the first and second wheels, and the control unit (310) is configured to determine the second compensation factor ($\beta_{i,j}$) as:

$$\frac{r_i}{r_j}$$

where $r_i$ is the unloaded wheel radius ($r_{uld}$) of the first wheel, and
$r_j$ is the unloaded wheel radius ($r_{uld}$) of the second wheel, and,
wherein the rotational speeds of the wheels are pairwise evaluated against one another, further in consideration of the second compensation factor ($\beta_{i,j}$).

11. The control unit (310) according claim 10, wherein the control unit (310) is configured to compare the rotational speeds ($\omega_1$, $\omega_2$, $\omega_3$, $\omega_4$, $\omega_5$, $\omega_6$) pairwise to one another via a procedure involving determining a third compensation factor ($\gamma_{i,j}$) reflecting respective deviations from effective rolling radii ($r_e$) of first and second wheels resulting from load effects ($L_{1-2}$, $L_{3-4}$, $L_{5-6}$) on the first and second wheels, the third compensation factor ($\gamma_{i,j}$) cancelling out differences in rotational speeds between the first and second wheels resulting from any differences in load effects on the first and second wheels, and the third compensation factor ($\gamma_{i,j}$) being determined as:

$$\frac{r_{ldi}}{r_{ldj}}$$

where

$r_{ldi}$ is an estimated rolling radius of the first wheel resulting from a vertical load on the first wheel, and
$r_{ldj}$ is an estimated rolling radius of the second wheel resulting from a vertical load on the second wheel, and,

wherein the rotational speeds of the wheels are pairwise evaluated against one another, further in consideration of the third compensation factor (yij).

12. The control unit (310) according to claim 11 when dependent on claim 10 when further dependent on claim 9, wherein the control unit (310) is configured to derive the at least one test variable by deriving first and second test variables $(R_1, R_2)$, the first test variable $(R_1)$ being derived as:

$$\frac{\omega_i}{\omega_j}\alpha_{i,j}\beta_{i,j} - \frac{\omega_k}{\omega_l}\alpha_{k,l}\beta_{k,l}$$

where $\omega_i$ is a rotational speed of the first wheel,

$\omega_j$ is a rotational speed of the second wheel,
$\alpha_{i,j}$ is the first compensation factor for the first and second wheels,
$\beta_{i,j}$ is the second compensation factor for the first and second wheels,
$\omega_k$ is a rotational speed of a third wheel,
$\omega_l$ is a rotational speed of a fourth wheel,
$\alpha_{k,l}$ is the first compensation factor for the third and fourth wheels, and
$\beta_{k,l}$ is the second compensation factor for the third and fourth wheels; and

the second test variable $(R_2)$ being derived as:

$$\frac{\omega_i}{\omega_j}\alpha_{i,j}\gamma_{i,j} - \frac{\omega_k}{\omega_l}\alpha_{k,l}\gamma_{k,l}$$

where $\gamma_{i,j}$ is the third compensation factor for the first and second wheels, and
$\gamma_{k,l}$ is the third compensation factor for the third and fourth wheels.

13. A vehicle (300) comprising the control unit (310) according to any one of claims 8 to 12 for identifying any wheels (110, 120, 130, 140, 150, 160) of the vehicle having low tire pressure.

**Patentansprüche**

1. Verfahren, das in einer Steuereinheit (310) ausgeführt wird, um einen niedrigen Reifendruck in einem Fahrzeug (300) zu erkennen, das wenigstens drei Räder (110, 120, 130, 140, 150, 160) aufweist, von denen wenigstens eines angetrieben wird, wobei das Verfahren die folgenden Schritte umfasst:

Erfassen einer jeweiligen Drehzahl ($\omega_1$, $\omega_2$, $\omega_3$, $\omega_4$, $\omega_5$, $\omega_6$) jedes Rades des Fahrzeugs;
paarweises Vergleichen der Drehzahlen miteinander, um wenigstens eine Testvariable $(R_1, R_2)$ abzuleiten; und
Untersuchen der wenigstens einen Testvariablen, um zu prüfen, ob ein oder mehrere Räder einen Reifendruck unterhalb eines Schwellenwerts aufweisen,

**gekennzeichnet durch** den Schritt des Vergleichens, wobei dieser Folgendes umfasst:

Schätzen eines Längsschlupfes (s) für jedes angetriebene Rad (130, 140), der sich aus einem auf das angetriebene Rad aufgebrachten Zugmoment (T) ergibt;
Bestimmen eines ersten Kompensationsfaktors ($\alpha_{i,j}$), der den geschätzten Längsschlupf (s) aufhebt, der sich aus dem auf das angetriebene Rad (130, 140) aufgebrachten Zugmoment (T) ergibt; und
paarweises Auswerten der Drehzahlen der Räder gegeneinander unter Berücksichtigung des ersten Kompensationsfaktors ($\alpha_{i,j}$), wobei die geschätzten Längsschlupfwerte ($s_i$, $s_j$) der Räder wenigstens eines ausgewerteten Paares voneinander verschieden sind, wobei der Schritt des paarweisen Vergleichens der Drehzahlen ($\omega_1$, $\omega_2$, $\omega_3$, $\omega_4$, $\omega_5$, $\omega_6$) miteinander das Berechnen wenigstens eines Quotienten zwischen einer ersten und zweiten Drehzahl eines ersten bzw. zweiten Rades umfasst.

2. Verfahren nach Anspruch 1, wobei der erste Kompensationsfaktor ($\alpha_{i,j}$) für ein erstes und zweites Rad wie folgt berechnet wird:

$$\frac{1 - s_i}{1 - s_j}$$

wobei: $s_i$ der geschätzte Längsschlupf für das erste Rad ist,
$s_j$ der geschätzte Längsschlupf für das zweite Rad ist,
$0 \leq s_i < 1$ und $0 \leq s_j < 1$.

3. Verfahren nach einem der vorangehenden Ansprüche, wobei der Schritt des Vergleichens ferner das Bestimmen eines zweiten Kompensationsfaktors ($\beta_{i,j}$) umfasst, der die jeweiligen effektiven Rollradien ($r_e$) des ersten und des zweiten Rades widerspiegelt, wobei der zweite Kompensationsfaktor ($\beta_{i,j}$) die Unterschiede in den Drehzahlen zwischen dem ersten und dem zweiten Rad aufhebt, die sich aus etwaigen Unterschieden in den effektiven Rollradien ($r_e$) des ersten und des zweiten Rades ergeben, und wobei der zweite Kompensationsfaktor ($\beta_{i,j}$) wie folgt bestimmt wird:

$$\frac{r_i}{r_j}$$

wobei: $r_i$ ein unbelasteter Radradius ($r_{uld}$) des ersten Rades ist und
$r_j$ ein unbelasteter Radradius ($r_{uld}$) des zweiten Rades ist
und
wobei die Drehzahlen der Räder paarweise gegeneinander ausgewertet werden und unter Berücksichtigung des zweiten Kompensationsfaktors ($\beta_{i,j}$).

4. Verfahren nach Anspruch 3, wobei der Schritt des Vergleichens ferner das Bestimmen eines dritten Kompensationsfaktors ($\gamma_{i,j}$) umfasst, der die jeweiligen Abweichungen von den effektiven Rollradien ($r_e$) des ersten und des zweiten Rades widerspiegelt, die sich aus den Lasteinwirkungen ($L_{1-2}$, $L_{3-4}$, $L_{5-6}$) auf das erste und zweite Rad ergeben, wobei der dritte Kompensationsfaktor ($\gamma_{i,j}$) die Unterschiede in den Drehzahlen zwischen dem ersten und dem zweiten Rad aufhebt, die sich aus etwaigen Unterschieden in den Lasteinwirkungen auf das erste und zweite Rad ergeben, und wobei der dritte Kompensationsfaktor ($\gamma_{i,j}$) wie folgt bestimmt wird:

$$\frac{r_{ldi}}{r_{ldi}}$$

wobei $r_{ldi}$ ein geschätzter Rollradius des ersten Rades ist, der sich aus einer vertikalen Last auf das erste Rad ergibt und
$r_{ldj}$ ein geschätzter Rollradius des zweiten Rades ist, der sich aus einer vertikalen Last auf das zweite Rad ergibt und
wobei die Drehzahlen der Räder paarweise gegeneinander ausgewertet werden und unter Berücksichtigung des dritten Kompensationsfaktors ($\gamma_{i,j}$).

5. Verfahren nach Anspruch 4, wobei das Ableiten der wenigstens einen Testvariablen das Ableiten einer ersten und zweiten Testvariablen ($R_1$, $R_2$) umfasst, wobei die erste Testvariable ($R_1$) wie folgt abgeleitet wird:

$$\frac{\omega_i}{\omega_j}\alpha_{i,j}\beta_{i,j} - \frac{\omega_k}{\omega_l}\alpha_{k,l}\beta_{k,l}$$

wobei $\omega_i$ eine Drehzahl des ersten Rades ist,

$\omega_j$ eine Drehzahl des zweiten Rades ist,
$\alpha_{i,j}$ der erste Kompensationsfaktor für das erste und zweite Rad ist,

$\beta_{i,j}$ der zweite Kompensationsfaktor für das erste und zweite Rad ist,
$\omega_k$ eine Drehzahl eines dritten Rades ist,
$\omega_l$ eine Drehzahl eines vierten Rades ist,
$\alpha_{k,l}$ der erste Kompensationsfaktor für das dritte und vierte Rad ist und
$\beta_{k,l}$ der zweite Kompensationsfaktor für das dritte und vierte Rad ist und

wobei die zweite Testvariable ($R_2$) wie folgt abgeleitet wird:

$$\frac{\omega_i}{\omega_j}\alpha_{i,j}\gamma_{i,j} - \frac{\omega_k}{\omega_l}\alpha_{k,l}\gamma_{k,l}$$

wobei $\gamma_{i,j}$ der dritte Kompensationsfaktor für das erste und zweite Rad ist und
$\gamma_{k,l}$ der dritte Kompensationsfaktor für das dritte und vierte Rad ist und wobei das Untersuchen der wenigstens einen Testvariablen das Untersuchen der ersten und zweiten Testvariablen ($R_1$, $R_2$) umfasst.

6. Computerprogrammprodukt, das in einen nichtflüchtigen Datenträger geladen werden kann, der kommunikativ mit einer Verarbeitungseinheit verbunden ist, wobei das Computerprogramm Software zum Ausführen des Verfahrens nach einem der Ansprüche 1 bis 5 umfasst, wenn das Computerprogramm in der Verarbeitungseinheit ausgeführt wird.

7. Nichtflüchtiger Datenträger mit einem Computerprogramm nach Anspruch 6.

8. Steuereinheit (310), die in einem Fahrzeug (300) vorhanden sein kann, das wenigstens drei Räder (110, 120, 130, 140, 150, 160) aufweist, von denen wenigstens eines angetrieben wird, wobei die Steuereinheit (310) dazu eingerichtet ist, niedrigen Reifendruck zu erkennen durch:

Erfassen einer jeweiligen Drehzahl ($\omega_1$, $\omega_2$, $\omega_3$, $\omega_4$, $\omega_5$, $\omega_6$) jedes Rades des Fahrzeugs;
paarweises Vergleichen der Drehzahlen miteinander, um wenigstens eine Testvariable ($R_1$, $R_2$) abzuleiten; und
Untersuchen der wenigstens einen Testvariablen, um zu prüfen, ob ein oder mehrere Räder einen Reifendruck unterhalb eines Schwellenwerts aufweisen,

**dadurch gekennzeichnet, dass** die Steuereinheit (310) dazu eingerichtet ist, das Vergleichen mittels eines Vorgehens durchzuführen, das Folgendes umfasst:

Schätzen eines Längsschlupfes (s) für jedes angetriebene Rad (130, 140), der sich aus einem auf das angetriebene Rad aufgebrachten Zugmoment (T) ergibt;
Bestimmen eines ersten Kompensationsfaktors ($\alpha_{i,j}$), der den geschätzten Längsschlupf (s) aufhebt, der sich aus dem Zugmoment (T) auf das angetriebene Rad (130, 140) ergibt; und
paarweises Auswerten der Drehzahlen der Räder gegeneinander unter Berücksichtigung des ersten Kompensationsfaktors ($\alpha_{i,j}$), wobei die geschätzten Längsschlupfwerte ($s_i$, $s_j$) der Räder wenigstens eines ausgewerteten Paares voneinander verschieden sind, wobei die Steuereinheit (310) dazu eingerichtet ist, die Drehzahlen ($\omega_1$, $\omega_2$, $\omega_3$, $\omega_4$, $\omega_5$, $\omega_6$) mittels eines Vorgehens, das das Berechnen wenigstens eines Quotienten zwischen einer ersten und zweiten Drehzahl eines ersten bzw. zweiten Rades umfasst, paarweise zu vergleichen.

9. Steuereinheit (310) Anspruch 8, wobei die erste Steuereinheit (310) dazu eingerichtet ist, den ersten Kompensationsfaktor ($\alpha_{i,j}$) für ein erstes und zweites Rad wie folgt zu berechnen:

$$\frac{1 - s_i}{1 - s_j}$$

wobei: $s_i$ der geschätzte Längsschlupf für das erste Rad ist,
$s_j$ der geschätzte Längsschlupf für das zweite Rad ist,
$0 \leq s_i < 1$ und $0 \leq s_j < 1$.

**10.** Steuereinheit (310) nach einem der Ansprüche 8 bis 9, wobei die Steuereinheit (310) dazu eingerichtet ist, die Drehzahlen ($\omega_1$, $\omega_2$, $\omega_3$, $\omega_4$, $\omega_5$, $\omega_6$) mittels eines Vorgehens paarweise zu vergleichen, das das Bestimmen eines zweiten Kompensationsfaktors ($\beta_{i,j}$) umfasst, der die jeweiligen effektiven Rollradien ($r_e$) des ersten und des zweiten Rades widerspiegelt, wobei der zweite Kompensationsfaktor ($\text{ß}_{i,j}$) die Unterschiede in den Drehzahlen zwischen dem ersten und dem zweiten Rad aufhebt, die sich aus etwaigen Unterschieden in den effektiven Rollradien ($r_e$) des ersten und des zweiten Rades ergeben, und die Steuereinheit (310) dazu eingerichtet ist, den zweiten Kompensationsfaktor ($\text{ß}_{i,j}$) wie folgt zu bestimmen:

$$\frac{r_i}{r_j}$$

wobei: $r_i$ der unbelastete Radradius ($r_{uld}$) des ersten Rades ist
und
$r_j$ der unbelastete Radradius ($r_{uld}$) des zweiten Rades ist
und
wobei die Drehzahlen der Räder paarweise gegeneinander ausgewertet werden und unter Berücksichtigung des zweiten Kompensationsfaktors ($\text{ß}_{i,j}$).

**11.** Steuereinheit (310) nach Anspruch 10, wobei die Steuereinheit (310) dazu eingerichtet ist, die Drehzahlen ($\omega_1$, $\omega_2$, $\omega_3$, $\omega_4$, $\omega_5$, $\omega_6$) mittels eines Vorgehens paarweise zu vergleichen, das das Bestimmen eines dritten Kompensationsfaktors ($y_{i,j}$) umfasst, der die jeweiligen Abweichungen von den effektiven Rollradien ($r_e$) des ersten und zweiten Rades widerspiegelt, die sich aus den Lasteinwirkungen ($L_{1-2}$, $L_{3-4}$, $L_{5-6}$) auf das erste und zweite Rad ergeben, wobei der dritte Kompensationsfaktor ($\gamma_{i,j}$) die Unterschiede in den Drehzahlen zwischen dem ersten und dem zweiten Rad aufhebt, die sich aus etwaigen Unterschieden in den Lasteinwirkungen auf das erste und zweite Rad ergeben, und wobei der dritte Kompensationsfaktor ($\gamma_{i,j}$) wie folgt bestimmt wird:

$$\frac{r_{ldi}}{r_{ldj}}$$

wobei $r_{ldi}$ ein geschätzter Rollradius des ersten Rades ist, der sich aus einer vertikalen Last auf das erste Rad ergibt
und
$r_{ldj}$ ein geschätzter Rollradius des zweiten Rades ist, der sich aus einer vertikalen Last auf das zweite Rad ergibt
und
wobei die Drehzahlen der Räder paarweise gegeneinander ausgewertet werden und unter Berücksichtigung des dritten Kompensationsfaktors ($\gamma_{i,j}$).

**12.** Steuereinheit (310) nach Anspruch 11, wenn abhängig von Anspruch 10, wenn ferner abhängig von Anspruch 9, wobei die Steuereinheit (310) dazu eingerichtet ist, die wenigstens eine Testvariable durch Ableiten erster und zweiter Testvariablen ($R_1$, $R_2$) abzuleiten, wobei die erste Testvariable ($R_1$) wie folgt abgeleitet wird:

$$\frac{\omega_i}{\omega_j}\alpha_{i,j}\beta_{i,j} - \frac{\omega_k}{\omega_l}\alpha_{k,l}\beta_{k,l}$$

wobei $\omega_i$ eine Drehzahl des ersten Rades ist,

$\omega_j$ eine Drehzahl des zweiten Rades ist,
$\alpha_{i,j}$ der erste Kompensationsfaktor für das erste und zweite Rad ist,
$\text{ß}_{i,j}$ der zweite Kompensationsfaktor für das erste und zweite Rad ist,
$\omega_k$ eine Drehzahl eines dritten Rades ist,
$\omega_l$ eine Drehzahl eines vierten Rades ist,
$\alpha_{k,l}$ der erste Kompensationsfaktor für das dritte und vierte Rad ist und
$\text{ß}_{k,l}$ der zweite Kompensationsfaktor für das dritte und vierte Rad ist und

wobei die zweite Testvariable ($R_2$) wie folgt abgeleitet wird:

$$\frac{\omega_i}{\omega_j}\alpha_{i,j}\gamma_{i,j} - \frac{\omega_k}{\omega_l}\alpha_{k,l}\gamma_{k,l}$$

wobei $\gamma_{i,j}$ der dritte Kompensationsfaktor für das erste und zweite Rad ist und
$\gamma_{k,l}$ der dritte Kompensationsfaktor für das dritte und vierte Rad ist.

13. Fahrzeug (300) mit der Steuereinheit (310) nach einem der Ansprüche 8 bis 12 zum Erkennen eines Rades (110, 120, 130, 140, 150, 160) des Fahrzeugs mit niedrigem Reifendruck.


**Revendications**

1. Procédé réalisé dans une unité de commande (310) pour identifier une pression de pneu faible dans un véhicule (300) ayant au moins trois roues (110, 120, 130, 140, 150, 160) dont au moins une est entraînée, le procédé comprenant les étapes de :

enregistrement d'une vitesse de rotation respective ($\omega_1$, $\omega_2$, $\omega_3$, $\omega_4$, $\omega_5$, $\omega_6$) de chaque roue du véhicule ;
comparaison des vitesses de rotation par paires les unes aux autres pour déduire au moins une variable d'essai ($R_1$, $R_2$) ; et
étude de l'au moins une variable d'essai pour vérifier si une ou plusieurs des roues ont une pression de pneu inférieure à un niveau seuil, **caractérisé par** l'étape de comparaison impliquant :

l'estimation, pour chaque roue entraînée (130, 140), d'un glissement longitudinal (s) résultant d'un couple de traction (T) appliqué à la roue entraînée ;
la détermination d'un premier facteur de compensation ($\alpha_{i,j}$), qui annule le glissement longitudinal estimé (s) résultant du couple de traction (T) appliqué à la roue entraînée (130, 140) ; et
l'évaluation des vitesses de rotation des roues par paires les unes par rapport aux autres, en tenant compte du premier facteur de compensation ($\alpha_{i,j}$) et où les glissements longitudinaux estimés ($S_i$, $S_j$) des roues d'au moins une paire évaluée sont mutuellement différents dans lequel l'étape de comparaison par paires des vitesses de rotation ($\omega_1$, $\omega_2$, $\omega_3$, $\omega_4$, $\omega_5$, $\omega_6$) les unes aux autres comprend le calcul d'au moins un quotient entre des première et deuxième vitesses de première et deuxième roues respectivement.

2. Procédé selon la revendication 1, dans lequel le premier facteur de compensation ($\alpha_{i,j}$) pour les première et deuxième roues est calculé comme :

$$\frac{1-s_i}{1-s_j}$$

où : $S_i$ est le glissement longitudinal estimé pour la première roue,
$S_j$ est le glissement longitudinal estimé pour la deuxième roue, $0 \leq S_i < 1$ et $0 \leq S_j < 1$.

3. Procédé selon l'une quelconque des revendications précédentes, dans lequel l'étape de comparaison comprend en outre la détermination d'un deuxième facteur de compensation ($\beta_{i,j}$) reflétant les rayons de roulement effectifs respectifs ($r_e$) des première et deuxième roues, le deuxième facteur de compensation ($\beta_{i,j}$) annulant les différences de vitesses de rotation entre les première et deuxième roues résultant de toute différence dans les rayons de roulement effectifs ($r_e$) des première et deuxième roues, et le deuxième facteur de compensation ($\beta_{i,j}$) étant déterminé comme :

$$\frac{r_i}{r_j}$$

où $r_i$ est un rayon libre de roue ($r_{uld}$) de la première roue, et

$r_j$ est un rayon libre de roue ($r_{uld}$) de la deuxième roue, et dans lequel les vitesses de rotation des roues sont évaluées par paires les unes par rapport aux autres, en outre en tenant compte du deuxième facteur de compensation ($\beta_{i,j}$).

4. Procédé selon la revendication 3, dans lequel l'étape de comparaison comprend la détermination d'un troisième facteur de compensation ($\gamma_{i,j}$) reflétant les écarts respectifs par rapport aux rayons de roulement effectifs ($r_e$) des première et deuxième roues résultant des effets de charge ($L_{1-2}$, $L_{3-4}$, $L_{5-6}$) sur les première et deuxième roues, le troisième facteur de compensation ($\gamma_{i,j}$) annulant les différences de vitesses de rotation entre les première et deuxième roues résultant de toute différence d'effets de charge sur les première et deuxième roues, et le troisième facteur de compensation ($\gamma_{i,j}$) étant déterminé comme :

$$\frac{r_{ldj}}{r_{ldi}}$$

où $r_{ldi}$ est un rayon de roulement estimé de la première roue

résultant d'une charge verticale sur la première roue, et
$r_{ldj}$ est un rayon de roulement estimé de la deuxième roue
résultant d'une charge verticale sur la deuxième roue, et

dans lequel les vitesses de rotation des roues sont évaluées par paires les unes par rapport aux autres, en outre en tenant compte du troisième facteur de compensation ($\gamma_{i,j}$).

5. Procédé selon la revendication 4, dans lequel la déduction de l'au moins une variable d'essai comprend la dérivation de première et deuxième variables d'essai ($R_1$, $R_2$), la première variable d'essai ($R_1$) étant dérivée comme :

$$\frac{\omega_i}{\omega_j}\alpha_{i,j}\beta_{i,j} - \frac{\omega_k}{\omega_l}\alpha_{k,l}\beta_{k,l}$$

où $\omega_i$ est une vitesse de rotation de la première roue,

$\omega_j$ est une vitesse de rotation de la deuxième roue,
$\alpha_{i,j}$ est le premier facteur de compensation pour les première et deuxième roues,
$\beta_{i,j}$ est le deuxième facteur de compensation pour les première et deuxième roues,
$\omega_k$ est une vitesse de rotation d'une troisième roue,
$\omega_l$ est une vitesse de rotation d'une quatrième roue,
$\alpha_{k,l}$ est le premier facteur de compensation pour les troisième et quatrième roues, et
$\beta_{k,l}$ est le deuxième facteur de compensation pour les troisième et quatrième roues ; et

la deuxième variable d'essai ($R2$) étant déduite comme :

$$\frac{\omega_i}{\omega_j}\alpha_{i,j}\gamma_{i,j} - \frac{\omega_k}{\omega_l}\alpha_{k,l}\gamma_{k,l}$$

où $\gamma_{i,j}$ est le troisième facteur de compensation pour les première et deuxième roues, et
$\gamma_{k,l}$ est le troisième facteur de compensation pour les troisième et quatrième roues, et
dans lequel l'étude de l'au moins une variable d'essai comprend l'étude des première et deuxième variables d'essai ($R_1$, $R_2$).

6. Produit de programme informatique chargeable dans un support de données non volatiles connecté de manière à communiquer avec une unité de traitement, le programme informatique comprenant un logiciel destiné à faire fonctionner le procédé selon l'une quelconque des revendications 1 à 5 lorsque le programme informatique fonctionne sur l'unité de traitement.

7. Support de données non volatiles contenant le programme informatique selon la revendication 6.

8. Unité de commande (310) adaptée pour être comprise dans un véhicule (300) ayant au moins trois roues (110, 120, 130, 140, 150, 160) dont au moins une est entraînée, l'unité de commande (310) étant configurée pour identifier une pression de pneu faible par :

   enregistrement d'une vitesse de rotation respective ($\omega_1$, $\omega_2$, $\omega_3$, $\omega_4$, $\omega_5$, $\omega_6$) de chaque roue du véhicule ;
   comparaison des vitesses de rotation par paires les unes aux autres pour déduire au moins une variable d'essai ($R_1$, $R_2$) ; et
   étude de l'au moins une variable d'essai pour vérifier si une ou plusieurs des roues ont une pression de pneu inférieure à un niveau seuil, **caractérisée en ce que** l'unité de commande (310) est configurée pour réaliser la comparaison par l'intermédiaire d'une procédure impliquant :

   l'estimation, pour chaque roue entraînée (130, 140), d'un glissement longitudinal (s) résultant d'un couple de traction (T) appliqué à la roue entraînée ;
   la détermination d'un premier facteur de compensation ($\alpha_{i,j}$), qui annule le glissement longitudinal estimé (s) résultant du couple de traction (T) sur la roue entraînée (130, 140) ; et
   l'évaluation des vitesses de rotation des roues par paires les unes par rapport aux autres, en tenant compte du premier facteur de compensation ($\alpha_{i,j}$) et dans laquelle les glissements longitudinaux estimés ($S_i$, $S_j$) des roues d'au moins une paire évaluée sont mutuellement différents, dans laquelle l'unité de commande (310) est configurée pour comparer les vitesses de rotation ($\omega_1$, $\omega_2$, $\omega_3$, $\omega_4$, $\omega_5$, $\omega_6$) par paires les unes aux autres par l'intermédiaire d'une procédure impliquant le calcul d'au moins un quotient entre des première et deuxième vitesses de première et deuxième roues respectivement.

9. Unité de commande (310) selon la revendication 8, dans laquelle l'unité de commande (310) est configurée pour calculer le premier facteur de compensation ($\alpha_{i,j}$) pour les première et deuxième roues comme :

$$\frac{1-s_i}{1-s_j}$$

   où : $S_i$ est le glissement longitudinal estimé pour la première roue,

   $S_j$ est le glissement longitudinal estimé pour la deuxième roue,
   $0 \leq S_i < 1$ et $0 \leq S_j < 1$.

10. Unité de commande (310) selon l'une quelconque des revendications 8 et 9, dans lequel l'unité de commande (310) est configurée pour comparer les vitesses de rotation ($\omega_1$, $\omega_2$, $\omega_3$, $\omega_4$, $\omega_5$, $\omega_6$) par paires les unes aux autres par l'intermédiaire d'une procédure impliquant la détermination d'un deuxième facteur de compensation ($\beta_{i,j}$) reflétant les rayons de roulement effectifs ($r_e$) respectifs des première et deuxième roues, le deuxième facteur de compensation ($\beta_{i,j}$) annulant les différences de vitesses de rotation entre les première et deuxième roues résultant de toute différence dans les rayons de roulement effectifs ($r_e$) des première et deuxième roues, et l'unité de contrôle (310) est configurée pour déterminer le deuxième facteur de compensation ($\beta_{i,j}$) comme :

$$\frac{r_i}{r_j}$$

   où $r_i$ est le rayon libre de roue ($r_{uld}$) de la première roue, et
   $r_j$ est le rayon libre de roue ($r_{uld}$) de la deuxième roue, et, dans laquelle les vitesses de rotation des roues sont évaluées par paires les unes par rapport aux autres, en outre en tenant compte du deuxième facteur de compensation ($\beta_{i,j}$).

11. Unité de commande (310) selon la revendication 10, dans laquelle l'unité de commande (310) est configurée pour comparer les vitesses de rotation ($\omega_1$, $\omega_2$, $\omega_3$, $\omega_4$, $\omega_5$, $\omega_6$) par paires les unes aux autres par l'intermédiaire d'une procédure impliquant la détermination d'un troisième facteur de compensation ($\gamma_{i,j}$) reflétant les écarts respectifs par rapport aux rayons de roulement effectifs ($r_e$) des première et deuxième roues résultant d'effets de charge ($L_{1-2}$, $L_{3-4}$, $L_{5-6}$) sur les première et deuxième roues, le troisième facteur de compensation ($\gamma_{i,j}$) annulant les différences de vitesses de rotation entre les première et deuxième roues résultant de toute différence d'effets de charge sur les première et deuxième roues, et le troisième facteur de compensation ($\gamma_{i,j}$) étant déterminé comme :

$$\frac{r_{ldi}}{r_{ldj}}$$

où $r_{ldi}$ est un rayon de roulement estimé de la première roue

résultant d'une charge verticale sur la première roue, et
$r_{ldj}$ est un rayon de roulement estimé de la deuxième roue
résultant d'une charge verticale sur la deuxième roue, et,

dans laquelle les vitesses de rotation des roues sont évaluées par paires les unes par rapport aux autres, en outre en tenant compte du troisième facteur de compensation ($\gamma_{i,j}$).

12. Unité de commande (310) selon la revendication 11 lorsqu'elle dépend de la revendication 10 lorsqu'elle dépend en outre de la revendication 9, dans laquelle l'unité de commande (310) est configurée pour déduire l'au moins une variable d'essai en déduisant des première et deuxième variables d'essai ($R_1$, $R_2$), la première variable d'essai ($R_1$) étant déduite comme :

$$\frac{\omega_i}{\omega_j}\alpha_{i,j}\beta_{i,j} - \frac{\omega_k}{\omega_l}\alpha_{k,l}\beta_{k,l}$$

où $\omega_i$ est une vitesse de rotation de la première roue,

$\omega_j$ est une vitesse de rotation de la deuxième roue,
$\alpha_{i,j}$ est le premier facteur de compensation pour les première et deuxième roues,
$\beta_{i,j}$ est le deuxième facteur de compensation pour les première et deuxième roues,
$\omega_k$ est une vitesse de rotation d'une troisième roue,
$\omega_l$ est une vitesse de rotation d'une quatrième roue,
$\alpha_{k,l}$ est le premier facteur de compensation pour les troisième et quatrième roues, et
$\beta_{k,l}$ est le deuxième facteur de compensation pour les troisième et quatrième roues ; et

la deuxième variable d'essai ($R_2$) étant déduite comme :

$$\frac{\omega_i}{\omega_j}\alpha_{i,j}\gamma_{i,j} - \frac{\omega_k}{\omega_l}\alpha_{k,l}\gamma_{k,l}$$

Où $\gamma_{i,j}$ est le troisième facteur de compensation pour les première et deuxième roues, et
$\gamma_{k,l}$ est le troisième facteur de compensation pour les troisième et quatrième roues.

13. Véhicule (300) comprenant l'unité de commande (310) selon l'une quelconque des revendications 8 à 12 pour identifier des roues quelconques (110, 120, 130, 140, 150, 160) du véhicule ayant une pression de pneu faible.

**Fig. 1a**

**Fig. 1b**

**Fig. 2**

**Fig. 3**

**Fig. 4**

```
                          ┌─────────┐
                          │  START  │
                          └────┬────┘
                               │
        ┌──────────────────────┼
        │                      ▼
        │   ┌──────────────────────────────────────┐     510
        │   │ Register rotational speeds of ≥ 3 wheels │
        │   └──────────────────┬───────────────────┘
        │                      ▼
        │   ┌──────────────────────────────────────┐     520
        │   │ Estimate a respective longitudinal slip for each │
        │   │ driven wheel resulting from applied torque │
        │   └──────────────────┬───────────────────┘
        │                      ▼
        │   ┌──────────────────────────────────────┐     530
        │   │ Determine at least one first compensation │
        │   │ factor, αᵢ,ⱼ, cancelling out the estimated │
        │   │        longitudinal slip              │
        │   └──────────────────┬───────────────────┘
        │                      ▼
        │   ┌──────────────────────────────────────┐     540
        │   │ Evaluate rotational speeds pairwise against │
        │   │ another in consideration of αᵢ,ⱼ and such that │
        │   │ the wheels of at least one evaluated pair │
        │   │ have mutually different longitudinal slips │
        │   └──────────────────┬───────────────────┘
        │                      ▼
        │              ◇─────────────────◇          550
        │        Yes  ◇  Test variable OK?  ◇
        │    ◄────────◇                   ◇
        │              ◇─────────────────◇
        │                   No │
        │                      ▼
        │   ┌──────────────────────────────────┐     560
        │   │ Identify the ≥ 1 wheel having tire │
        │   │ pressure below a threshold level   │
        │   └──────────────────┬───────────────┘
        │                      │
        └──────────────────────┘
```

**Fig. 5**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090173149 A
- US 6222444 B
- US 5712616 A
- EP 0712740 A2

**Non-patent literature cited in the description**

- **J. Y. WONG.** Theory of ground vehicles. John Wiley & Sons, Inc, 2008, 14-15